# EUROPEAN PATENT SPECIFICATION

(11) **EP 2 023 725 B1**
(45) Date of publication and mention of the grant of the patent: **18.03.2015**
(21) Application number: 07794823.0
(22) Date of filing: 14.05.2007
(51) Int. Cl.: A01N 43/40, C07D 403/04, A01N 25/30, A01N 31/02, A01N 43/36, A01N 55/00

(54) **METHOD FOR TREATING COCKROACHES**
METHODE ZUR BEHANDLUNG VON KAKERLAKEN
MÉTHODES D'APPLICATION POUR TRAITEMENT DES BLATTES

(30) Priority: 15.05.2006 US 800531 P; 10.05.2007 US 801441
(43) Date of publication of application: 18.02.2009
(73) Proprietor: OMS INVESTMENTS, Inc., Los Angeles, CA 90067-6228 (US)
(72) Inventor: RADER, Jason, Marysville, OH 43040 (US); HOLLIS, Shannon, Delaware, OH 43015 (US); MCDONALD, Casey, Columbus, OH 43235 (US)
(74) Representative: Noel, Chantal Odile
(86) International application number: PCT/US2007/011496
(87) International publication number: WO 2007/136596

(56) References cited:
- EP-A1- 0 648 413
- US-A- 5 504 054
- US-A- 5 558 806
- US-A- 5 906 961
- US-A- 5 998 331
- US-B2- 6 717 019
- IMAI T ET AL: "SURFACE TENSION-DEPENDENT SURFACTANT TOXICITY ON THE GREEN PEACH APHID, MYZUS PERSICAE (SULZER) (HEMIPTERA: APHIDIDAE)", APPLIED ENTOMOLOGY AND ZOOLOGY, NIPPON OYO DOBUTSU KONCHU GAKKAI, TOKYO, JP, vol. 29, no. 3, 1 January 1994 (1994-01-01), pages 389-393, XP001085164, ISSN: 0003-6862
- COWLES R.S. ET AL: '"Inert" Formulation Ingredients with Activity: Toxicity of Trisiloxane Surfactant Solutions to Two-spotted Spider Mites (Acari: Tetranychidae)' JOURNAL OF ECONOMIC ENTOMOLOGY vol. 93, no. 2, 2000, pages 180 - 188, XP008102386
- NIKOLOV A.D. ET AL: 'Superspreading driven by Marangoni flow' ADVANCES IN COLLOID AND INTERFACE SCIENCE vol. 96, 2002, pages 325 - 338, XP008100451

## Description

### CROSS-REFERENCE TO RELATED APPLICATION

This application claims priority to Provisional Application No. 60/800,531, filed May 15 2006.

### BACKGROUND OF THE INVENTION

### 1. Field of the Invention

The present invention relates generally to pesticidal formulations containing surfactants and to methods for the use thereof. More particularly, the formulations of the present invention contain surfactants enabling the formulations to exhibit surface tension levels which cause improved pesticidal efficacy of treated arthropods.

### 2. Description of Related Art

Pesticidal formulations can be in the form of solutions, emulsions, suspensions, dispersions and the like, and are used in agriculture for applying agricultural chemicals to plants, soil, insects and the like. Among typical pesticidal chemicals are herbicides, insecticides, fungicides, growth regulators and the like.

Such formulations have been known to contain surfactants such as trisiloxane surfactants and other surfactants to enhance the physical characteristics of the formulation for treating pests such as by improving the spreading thereof when the formulation is applied in agriculture.

However, prior pesticidal formulations including those employing surfactants therein have not been sufficiently effective for causing quick kill of arthropods treated therewith. As used herein the term "quick kill" means a period of time of two minutes or less to achieve "mortality" of treated arthropods.

The term arthropod as employed herein means cockroaches.

The deficiency in speed of kill achieved with prior art pesticidal formulations is significant and there has been an on-going need in the consumer market for liquid insecticidal ready-to-use products, which provide fast and effective mortality rates of treated arthropods and, in particular, quick kill attributes. For example, known formulations often require as much as one-quarter hour or more to achieve acceptable mortality levels against difficult to control pests, such as American cockroaches (Periplaneta americana).

Thus, it would be advantageous to provide pesticidal formulations containing surfactants which provide improved mortality rates in the order of 80% or greater within about two minutes or less, after treatment of the pests including difficult to control pests such as cockroaches.

It would also be advantageous to provide pesticidal formulations containing surfactants which enable the formulation to have a dynamic surface tension as measured with a Kruss Bubble Pressure Tensiometer (BP2 Version 1.20) which provides enhanced mortality rates (quick kill) of arthropods treated with the formulations.

In particular, it would be advantageous to provide formulations which contain surfactants, such as certain trisiloxane surfactants, and suitable other surfactants which act to reduce the dynamic surface tension of the formulation to a level of less than 30 dynes per centimeter as measured with a Kruss Bubble Pressure Tensiometer (BP2 Version 1.20) whereby a mortality rate of more than about 80% of treated arthropods is achieved within about two minutes or less after treatment.

### SUMMARY OF THE INVENTION

Accordingly, it is an object of the present invention to provide a method for treating cockroaches comprising compositions wherein the surfactant portion enables a dynamic surface tension level as measured with a Kruss Bubble Pressure Tensiometer (BP2 Version 1.20) of the formulation sufficient to cause a desired mortality rate of cockroaches.

Another object is to provide a method for treatment of cockroaches comprising agricultural formulations containing certain surfactants such as trisiloxane surfactants that provide improved rapid cockroaches mortality when applied directly to the cockroaches.

In particular, it is an object to provide a method for treating cockroaches providing compositions containing at least one surfactant which causes the dynamic surface tension of the composition to be at a level of less than 0.03 N/m (30 dynes per centimeter) as measured with a Kruss Bubble Pressure Tensiometer (BP2 Version 1.20) whereby treatment of arthropods with the composition causes more than 80% mortality of the treated cockroaches within two minutes or less after the cockroaches are treated with the composition.

### DETAILED DESCRIPTION OF THE INVENTION

In accordance with the present invention, a method is provided for causing cockroaches mortality in which the composition comprises a formulation containing at least one surfactant which causes the dynamic surface tension of the formulation to be at a level of less than 0.03N/m (30 dynes per centimeter) as measured with a Kruss Bubble Pressure Tensiometer (BP2 Version 1.20) whereby a quick kill rate of more than 80% mortality of arthropods treated with the formulation is achieved within about two minutes or less, after the cockroaches are treated with the composition.

The at least one surfactant in the compositions of the present invention is preferably selected from the group consisting of trisiloxane, ethoxylated acetylenic diol and pyrrolidone surfactants and mixtures thereof.

In a preferred embodiment, the at least one surfactant in the composition is a trisiloxane surfactant selected from the group consisting of: 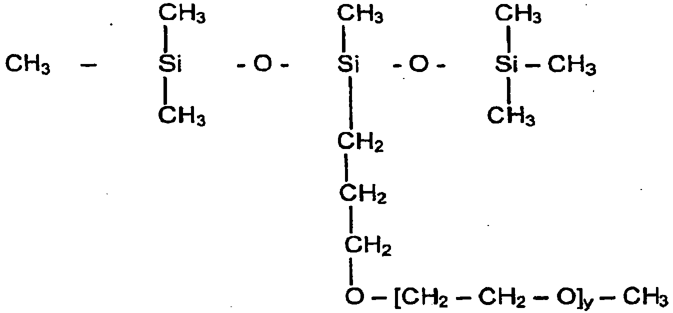 wherein y=8; and 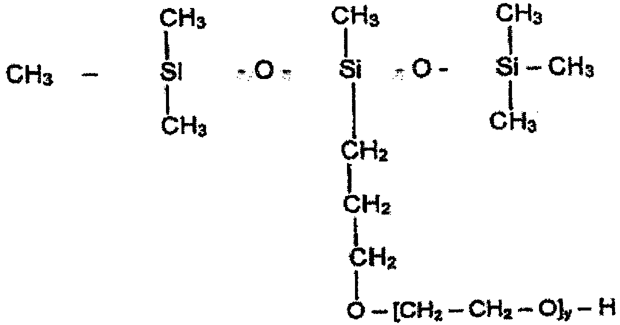 wherein y=8; and
mixtures thereof.

In further preferred embodiments, the at least one surfactant is selected from the group consisting of 2,5,8,11 tetramethyl 6 dodecyn-5,8 diol ethoxylate; ethoxylated 2,4,7,9 - tetramethyl 5 decyn - 4,7 - diol; mixed alkylpyrrolidones; sulfuric acid monododecyl ester sodium salt; polyether modified polysiloxane surfactants and mixtures thereof.

In the methods of the present invention, the at least one surfactant is present in the formulation in a sufficient concentration to cause the dynamic surface tension level of the formulation as measured with a Kruss Bubble Pressure Tensiometer (BP2 Version 1.20) to be less than 0.03 N/m (30 dynes per centimeter). In a preferred embodiment, the surfactant is present at a concentration of 0.1 weight percent to 1.0 weight percent.

It is most preferred that the at least one surfactant in the composition is selected from the group consisting of Silwet L-77^{®} (General Electric Company, Waterford, NY); and Silwet REACH^{®}, also known as Silwet 408^{®} (General Electric Company, Waterford, NY); and mixtures thereof.

As a result of the unexpected rapid mortality rates (quick kill) achieved in treating cockroaches when the noted surfactants are present in the compositions of the present invention at a concentration sufficient to cause the dynamic surface tension of the composition to be at a level of less than 0.03 N/m (30 dynes per centimeter) as measured with a Kruss Bubble Pressure Tensiometer (BP2 Version 1.20), it has been found that very effective agricultural products, including liquid pesticidal products, can be provided which will fulfill the need in the consumer market for pesticidal products which provide better mortality rates (quick kill), of difficult to control arthropods.

In general, an agricultural spray mixture contains water and an active agricultural chemical ingredient, such as a pesticide (including herbicides, insecticides, fungicides, growth regulators and the like). Typically, at least 50 percent of a pesticidal spray mixture is composed of water. Optionally, the pesticidal spray mixture can contain at least one component selected from the group consisting of organic surfactants, antifoam agents and organic solvents. Agricultural spray mixtures are commercially available as ready-to-use products or can be prepared in a containment vessel from an agricultural chemical concentrate, water, and optionally one or more surfactants and/or antifoaming agents.

The amount of an active ingredient (i.e., agricultural chemical) in a spray mixture, if used in addition to the at least one surfactant employed in the compositions of the present invention as described above, will be any amount effective for the intended purpose, but typically will range from 0.001 to 5 percent by weight based upon the total weight of the agricultural spray mixture (e.g., from 0.03 percent to 0.5 percent, preferably from 0.05 percent to 0.25 percent based upon the total weight of the agricultural spray mixture). The bulk of the remainder of the agricultural spray mixture is comprised of water.

Surfactants, solvents, biocides, antifoam agents, antifreezes, pH modifiers, colorants, nutrients and plant growth regulators may be included in the formulations to achieve desired results.

To screen the efficacy of pesticides using selected surfactants, and combinations of surfactants, American cockroaches, (Periplaneta americana) known to be difficult to kill, were introduced into 38.1 mm (1.5-inch) diameter polyvinyl chloride (PVC) pipe sections with stainless steel screens affixed to the bottom end. An automatic pipetter was used to apply 4.8 ml of a composition of this invention to each cockroach. Excess liquid was drained from the tubes through the stainless steel screen. Each cockroach was transferred to a clean polypropylene container where mortality results were recorded 120 seconds after application of the composition. A cockroach is determined to be killed when life functions have ended and movement is no longer observed in the testing container.

Illustrative pesticides which can be employed as an active ingredient in the pesticidal spray mixtures of the present invention, in addition to the at least one surfactant described herein, include those from the groups consisting of herbicides, insecticides, fungicides, miticides and the like.

### EXAMPLE

In accordance with this Example, surfactants were tested which enable formulations containing such surfactants to have a dynamic surface tension of less than 0.03 N/m (30 dynes per centimeter) as measured with a Kruss Bubble Pressure Tensiometer (BP2 Version 1.20) for treatment of American cockroaches and comparisons were made with formulations used for treatment of American cockroaches which contained other surfactants which did not produce formulations exhibiting the required level of dynamic surface tension as measured with a Kruss Bubble Pressure Tensiometer (BP2 Version 1.20).

Based on this testing, it was determined that the following surfactants provide formulations exhibiting a level of dynamic surface tension necessary to accomplish the objectives of the present invention. The most preferred surfactants are products sold under the trademarks: Silwet REACH^{®}, Silwet L-77^{®}, Agrimax^{®} 3 and combinations of Dynol 604 and Surfynol 465.

The chemical structure of Silwet REACH as characterized hereinabove is as follows: 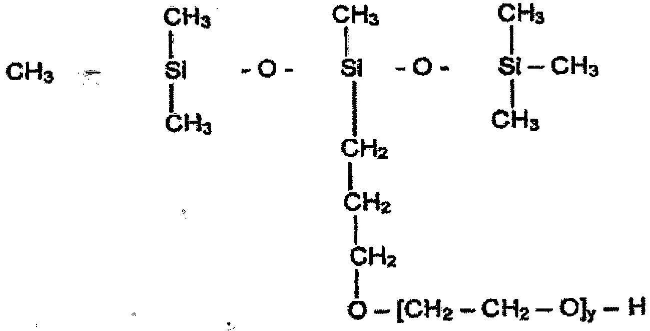 wherein y=8.

The chemical structure of Silwet L-77 as characterized hereinabove is as follows: 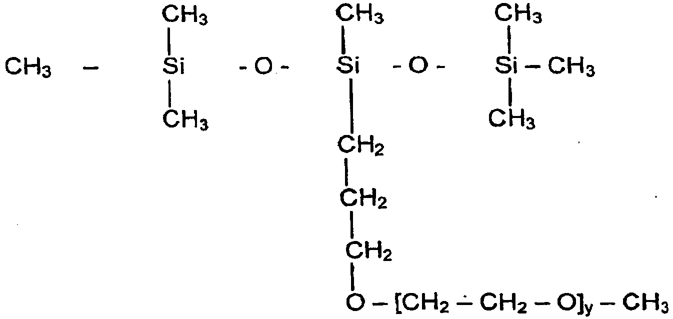 wherein y=8.

It should be noted that In the chemical structure of the Silwet L-77^{®} and Silwet REACH trisiloxane surfactants the amount of (C₂ H₄O) represents an average.

The chemical description of Dynol 604 is a 2,5,8,11 tetramethyl 6 dodecyn-5,8 diol ethoxylate.

The chemical description of Surfynol 465 is ethoxylated 2,4,7,9- tetramethyl 5 decyn - 4,7 - diol.

Agrimax^{®} 3 is a water based microemulsion forming system commercially supplied by International Specialty Products containing mixed alkyl pyrrolidones, surfactants and water insoluble polymers.

Surfactants that were tested in this Example which did not provide formulations which exhibit the required level of dynamic surface tension, as measured with a Kruss Bubble Pressure Tensiometer (BP2 Version 1.20), included phosphate esters and alcohol ethoxylates. The products tested are sold under the trademarks TMULZ 1227 (Harcros Chemicals Inc., Kansas City, KS) and Ethylan TD-120 (Akzo Nobel Surface Chemistry LLC, Chicago, IL). The chemical description for TMULZ 1227 is phosphate ester and the chemical description for Ethylan TD-120 is alcohols, C₁₁₋₁₄ iso-, C₁₃-iso-rich, ethoxylated.

The formulations employed in this example were prepared in accordance with the following procedures:
(i) Formulations 1-10 tabulated below in the Table were prepared by introducing and mixing the specified surfactant/surfactants, at the weight percentages indicated in the Table, into a base composition containing 0.387 to 0.389 wt percent of an agriculturally active ingredient such as bifenthrin, (commercially available from FMC Corporation as Talstar MUP, a liquid concentrate containing 13.0% bifenthrin Talstar MUP); 1.544 to 1.549 wt percent other inert ingredients and 98.1214 to 99.052 wt percent water;
(ii) Formulations 11-13 tabulated below in the Table were not introduced into the base composition but, to the contrary, were prepared by introducing and mixing the specified weight percentages of the surfactant/surfactants in 99 wt percent water, without any other additives; and
(iii) Formulation 14 was a control containing no surfactants or other additive ingredients.

The formulations tested and the results of such testing are set forth in the following Table:

**Table**

| | | **Dynamic Surface Tension (Dynes/cm)* At Frequency** | | | | **Mortality (mean) 120 SAT**** |
|---|---|---|---|---|---|---|
| | **Surfactants in Formulations 1-14** | 2Hz | 3Hz | 4Hz | 5Hz | |
| 1 | Silwet REACH + Silwet L-77 (1%) | 22 | 22 | 23 | 24 | 100% |
| 2 | Silwet REACH (1%) | 24 | 25 | 26 | 27 | 100% |
| 3 | Silwet L-77 (1%) | 23 | 24 | 24 | 25 | 100% |
| 4 | Silwet REACH (0.5%) | 25 | 26 | 28 | 29 | 100% |
| 5 | Silwet L-77 (0.5%) | 26 | 27 | 28 | 30 | 80% |
| 6 | Silwet 806 (1%) | 24 | 25 | 27 | 29 | 90% |
| 7 | Dynol 604 + Surfynol 465 (1%) | 26 | 26 | 26 | 27 | 100% |
| 8 | Agrimax 3 (1 %) - | 29 | 29 | 30 | 30 | 85% |
| 9 | TMulz 1227 (1%) | 31 | 32 | 32 | 33 | 35% |
| 10 | Ethylan TD 120 (1%) | 34 | 35 | 35 | 36 | 35% |
| 11 | Water + Silwet REACH + Silwet L-77 (1%) | 21 | 22 | 23 | 24 | 100% |
| 12 | Water + Silwet REACH (1%) | 21 | 22 | 24 | 25 | 100% |
| 13 | Water + Silwet L-77 (1%) | 21 | 22 | 23 | 24 | 100% |
| 14 | Untreated | | | | | 0% |

| | | | | | | |
|---|---|---|---|---|---|---|
| * Measured with a Kruss Bubble Pressure Tensiometer (BP2 Version 1.20) ** SAT means seconds after treatment | | | | | | |

From the results tabulated above, it should be clear that there is a direct correlation between the dynamic surface tension of the formulation, as measured with a Kruss Bubble Pressure Tensiometer (BP2 Version 1.20), and the level of mortality achieved in treating a difficult to treat arthropod such as the American cockroaches treated herein.

Specifically, the tabulated results demonstrate that the formulations of the present invention including the surfactants which provide a dynamic surface tension of less than 0.03 N/m (30 dynes per centimeter) as measured with a Kruss Bubble Pressure Tensiometer (BP2 Version 1.20) caused mortality rates of more than about 80% within two minutes (ie, 120 seconds) or less after treatment of the American cockroaches treated herein.

## Claims

1. A method for treating cockroaches comprising:
(a) providing a formulation comprising at least one surfactant;
wherein the surfactant is a silicone surfactant, ethoxylated acetylenic diol surfactant, pyrrolindone surfactant, or mixtures thereof;
wherein the surfactant is at a concentration of 0.1 weight percent to 1.0 weight percent,
wherein the formulation comprises a dynamic surface tension level of less than 0.03 N/m (30 dynes per centimeter) as measured with a Kruss Bubble Pressure Tensiometer (BP2 Version 1.20); and
(b) applying the formulation to the cockroach
(c) causing the cockroaches to exhibit a mortality rate of more than 80% within two minutes or less after the cockroach is treated with the formulation.

2. The method of claim 1, wherein the silicone surfactant is a siloxane surfactant.

3. The method of claim 2, wherein the siloxane surfactant is selected from the group consisting of 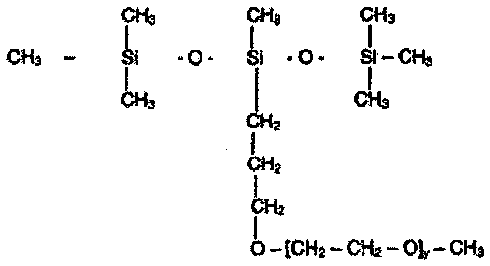 wherein y=8; and 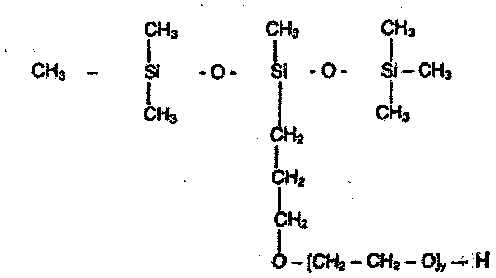 wherein y=8; and mixtures thereof.

4. The method of claim 1, wherein the at least one surfactant is selected from the group consisting of 2,5,8,11 tetramethyl 6 dodecyn-5,8 diol ethoxylate; exthoxylated 2,4,7,9-tetramethyl 5 decyn-4,7-diol; mixed alkylpyrrolindones; polyether modified polysiloxane and mixtures thereof.

5. The method of any of claims 1-4, wherein the at least one surfactant is present in the composition, in the absence of any other pesticidally active ingredient.

## Patentansprüche

1. Verfahren zur Behandlung von Kakerlaken, das umfasst:
(a) Bereitstellen einer Formulierung, die mindestens einen oberflächenaktiven Stoff umfasst;
wobei der oberflächenaktive Stoff ein Silikonoberflächenaktiver Stoff, ein (ethoxyliertes acetylenisches Diol)-oberflächenaktiver Stoff, ein Pyrrolidon-oberflächenaktiver Stoff oder eine Mischung davon ist;
wobei der oberflächenaktive Stoff bei einer Konzentration von 0,1 Gewichtsprozent bis 1,0 Gewichtsprozent vorliegt,
wobei die Formulierung ein Level der dynamischen Oberflächenspannung von weniger als 0,03 N/m (30 Dyn pro Zentimeter), wie mit einem Kruss-Blasendruck-Tensiometer (BP2 Version 1.20) gemessen, umfasst; und
(b) Aufbringen der Formulierung auf die Kakerlake
(c) Verursachen, dass die Kakerlaken eine Sterblichkeitsrate von mehr als 80% innerhalb von zwei Minuten oder weniger, nachdem die Kakerlake mit der Formulierung behandelt ist, zeigen.

2. Verfahren gemäß Anspruch 1, wobei der Silikonoberflächenaktive Stoff ein Siloxan-oberflächenaktiver Stoff ist.

3. Verfahren gemäß Anspruch 2, wobei der Siloxanoberflächenaktive Stoff ausgewählt ist aus der Gruppe, bestehend aus 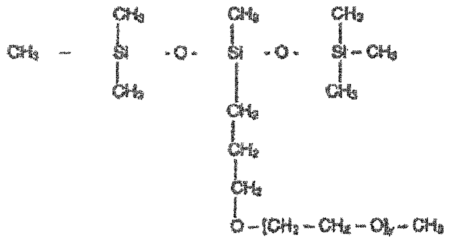 wobei y=8; und 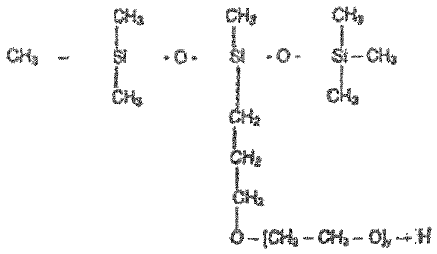 wobei y=8; und Mischungen davon.

4. Verfahren gemäß Anspruch 1, wobei der mindestens eine oberflächenaktive Stoff ausgewählt ist aus der Gruppe, bestehend aus 2,5,8,11-Tetramethyl-6-dodecin-5,8-diolethoxylat; ethoxyliertem 2,4,7,9-Tetramethyl-5-decin-4,7-diol; gemischten Alkylpyrrolindonen; polyethermodifiziertem Polysiloxan und Mischungen davon.

5. Verfahren gemäß einem der Ansprüche 1-4, wobei der mindestens eine oberflächenaktive Stoff in der Zusammensetzung in der Abwesenheit irgendeines anderen pestizidisch wirksamen Bestandteils vorliegt.

## Revendications

1. Procédé pour traiter les cafards comprenant :
(a) fournir une formulation comprenant au moins un tensioactif ;
dans laquelle le tensioactif est un tensioactif de type silicone, un tensioactif de type diol acétylénique éthoxylé, un tensioactif de type pyrrolindone, ou des mélanges de ceux-ci ;
dans laquelle le tensioactif est à une concentration de 0,1 à 1,0 % en poids,
dans laquelle la formulation comprend un niveau de tension superficielle dynamique inférieur à 0,03 N/m (30 dynes par centimètre), tel que mesuré avec un tensiomètre de pression à bulle Kruss (BP2 Version 1.20) ; et
(b) l'application de la formulation au cafard
(c) provoquant les cafards de présenter un taux de mortalité supérieur à 80 % dans les deux minutes ou moins après que le cafard a été traité avec la formulation.

2. Procédé selon la revendication 1, dans lequel le tensioactif de type silicone est un tensioactif siloxane.

3. Procédé selon la revendication 2, dans lequel le tensioactif siloxane est choisi dans le groupe constitué par 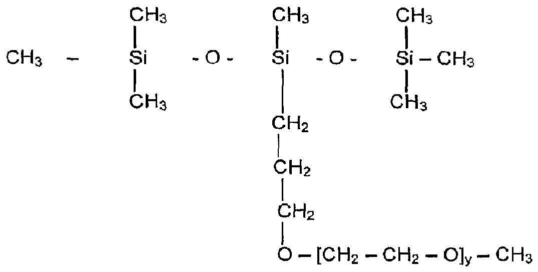 où y = 8 ; et 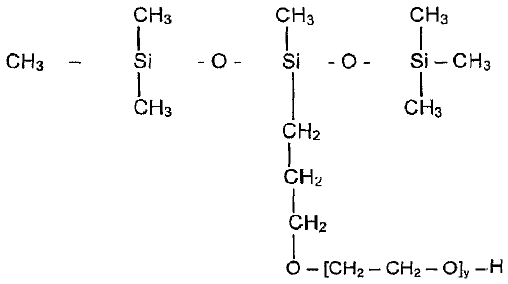 où y = 8 ; et leurs mélanges.

4. Procédé selon la revendication 1, dans lequel ledit au moins tensioactif est choisi dans le groupe constitué par l'éthoxylate de 2,5,8,11-tétraméthyl-6-dodécyn-5,8-diol ; le 2,4,7,9-tétraméthyl-5-décyn-4,7-diol éthoxylé ; les mélanges d'alkylpyrrolindones ; le polysiloxane modifié par un polyéther ; et leurs mélanges.

5. Procédé selon l'une quelconque des revendications 1 à 4, dans lequel ledit au moins tensioactif est présent dans la composition, en l'absence de toute autre substance active en termes de pesticide.
